# EUROPEAN PATENT APPLICATION

(11) **EP 3 584 993 A1**
(43) Date of publication of application: **25.12.2019**
(21) Application number: 18305759.5
(22) Date of filing: 18.06.2018
(51) Int. Cl.: H04L 9/08

(54) **METHOD FOR SECURELY SHARING DATA UNDER CERTAIN CONDITIONS ON A DISTRIBUTED LEDGER**

(71) Applicant: GEMALTO SA, 92190 Meudon (FR)
(72) Inventor: BARKI, Amira, 92190 Meudon (FR); GOUGET, Aline, 92190 Meudon (FR); GEORGIEVA, Mariya, 92190 Meudon (FR)
(74) Representative: Bricks, Amélie

(57) **Abstract**

The present invention relates to a method for secure data and cryptographic key sharing on a ledger distributed on a network between a plurality of network connected devices called entities comprising, performed by a first entity of said plurality of entities, owner of data to be shared:
- determining (S1) a first encryption algorithm,
- obtaining (S2) a first cryptographic key pair comprising a first cryptographic encryption key and a first cryptographic decryption key,
- encrypting (S3) data to be shared using said generated first cryptographic encryption key and said determined first encryption algorithm,
- sharing (S4) encrypted data with said plurality of entities,
- specifying (S5) pre-requisites to be fulfilled before decryption of the shared encrypted data,
- determining (S6) a first predetermined number of trusted entities among said plurality of entities,
- defining (S7) a first threshold equal to a minimum number of entities required for decryption of the shared encrypted data among said trusted entities,
- computing (S8) as many secret shares of said first cryptographic decryption key as the first predetermined number of trusted entities by applying a secret sharing scheme to said first cryptographic decryption key,
- securely transmitting (S9) said computed secret shares to the trusted entities.

## Description

### FIELD OF THE INVENTION

The present invention relates to the field of data sharing under certain conditions on a ledger distributed on a network, and more particularly to a method for securely sharing data under certain conditions to a requesting entity by using a threshold decryption scheme.

### BACKGROUND OF THE INVENTION

Cryptographic algorithms are commonly used for protecting data to be shared from a data owner to other entities, by encrypting said data and providing only approved entities with the elements needed for decrypting the data, such as a decryption key.

Under some circumstances, a data owner may not fully trust each of the entities with which data is shared. He may also want to share such data only when some prerequisites are met. In such a case, data to be shared may be encrypted and directly shared by the owner with such entities but the data owner may not share with them the decryption keys enabling them to decrypt the shared data on their own.

For example, citizens data may be shared between two countries in order to make easier identity control at borders but a country may want to keep some control on such data and allow the other country to access the data of a citizen only when needed, for example when this citizen is traveling abroad.

In such cases, existing solutions require an entity requesting access to a shared data to issue a request to the data owner in order to make the data owner check the legitimacy of the request and decrypt the encrypted shared data and provide the decrypted data to the requesting entity. Such a request mechanism enables the data owner to check the legitimacy of the request, by checking if the prerequisites are met, before decrypting and providing the data to the requesting entity.

Unfortunately, in some cases the data owner may not be able to provide such a decrypted data; for example if he is away, in the case of a human being, or if he has undergone a computer system failure or an attack making him unable to answer access requests from requesting entities.

Consequently, there is a need for a method enabling a data owner to securely share with other entities data and enabling the other entities to access the shared data even when the data owner is unavailable, but only when certain pre-requisites are fulfilled, while preventing a single requesting entity from accessing the shared data on its own without action by another entity.

### SUMMARY OF THE INVENTION

For this purpose and according to a first aspect, this invention therefore relates to method for secure data and cryptographic key sharing on a ledger distributed on a network between a plurality of network connected devices called entities comprising,
performed by a first entity of said plurality of entities, owner of data to be shared:
- determining a first encryption algorithm,
- obtaining a first cryptographic key pair comprising a first cryptographic encryption key and a first cryptographic decryption key,
- encrypting data to be shared using said generated first cryptographic encryption key and said determined first encryption algorithm,
- sharing encrypted data with said plurality of entities,
- specifying pre-requisites to be fulfilled before decryption of the shared encrypted data,
- determining a first predetermined number of trusted entities among said plurality of entities,
- defining a first threshold equal to a minimum number of entities required for decryption of the shared encrypted data among said trusted entities,
- computing as many secret shares of said first cryptographic decryption key as the first predetermined number of trusted entities by applying a secret sharing scheme to said first cryptographic decryption key,
- securely transmitting said computed secret shares to the trusted entities.

Such a method enables the first entity to share data with the other entities, while preventing any single entity to decrypt the data on its own. It also shares with the entities the secret shares needed to collectively decrypt the data if any entity requests such a decryption and if the pre-requisites defined by the first entity are fulfilled, even if the first entity is unavailable at the time of decryption.

The method according to the first aspect may comprise creating a first smart contract, running on said distributed ledger, said smart contract automatically verifying that said specified pre-requisites are fulfilled and triggering decryption of said shared encrypted data when said specified pre-requisites are fulfilled.

Such a smart contract enables to check that the pre-requisites are fulfilled before proceeding to the decryption, even if the first entity is unavailable.

According to a second aspect, this invention therefore relates also to a method for secure access to data shared on a ledger distributed on a network between a plurality of network connected devices called entities comprising, performed by a second entity of said plurality of entities requesting access to data owned by a first entity of said plurality of entities, said first entity having previously performed the steps of the method according to the first aspect to share said requested data and first cryptographic decryption key secret shares:
- obtaining said requested data encrypted with the first cryptographic encryption key and the determined first encryption algorithm by said first entity,
- decrypting said obtained data using a threshold decryption scheme performed by a plurality of trusted decrypting entities, among said trusted entities, each using the first cryptographic decryption key secret share transmitted to it by the first entity,
the number of trusted decrypting entities being at least equal to said first threshold,
and said decryption of said obtained data being performed only if said pre-requisites specified by said first entity are fulfilled.

It enables the second entity to get access to the shared data, under a decrypted form, even if the first entity is not available, but only if the pre-requisites are fulfilled and only after a cooperation of a required number of trusted entities.

Said used threshold decryption scheme may be among: threshold EIGamal decryption scheme, threshold symmetric one-time-key-use decryption scheme, threshold RSA decryption scheme, and threshold ECC-EIGamal decryption scheme, threshold Paillier decryption scheme.

The method according to the second aspect may comprise:
- requesting the execution of the first smart contract created by the first entity on the distributed ledger, said decryption of said obtained data being performed only if pre-requisites verified by the first smart contract are fulfilled.

Such an execution of the smart contract enables to trigger the verification of the pre-requisites and then the decryption of the shared data, without any action of the first entity in the context of a distributed ledger.

In a first embodiment, decrypting said obtained data comprises :
- securely obtaining, from each trusted decrypting entity, the first cryptographic decryption key secret share received by said entity,
- combining the obtained first cryptographic decryption key secret shares to reconstruct the first cryptographic decryption key,
- decrypting the encrypted requested data with the reconstructed first cryptographic decryption key to get the decrypted requested data

Such a first embodiment enables the second entity to get the decrypted requested data without requiring any calculation from the trusted decrypting entities.

In a second embodiment, decrypting said obtained data comprises :
- securely receiving, from each trusted decrypting entity, a computing result obtained from the encrypted requested data and from the first cryptographic decryption key secret share received by said entity,
- combining the received computing results to get the decrypted requested data.

Such a second embodiment enables the second entity to get the decrypted requested data without reconstruction the full decryption key of the first entity. In such a case, this decryption key is not revealed and may be used for sharing data several times.

According to a third aspect, this invention therefore relates also to a computer program product directly loadable into the memory of at least one computer, comprising software code instructions for performing the steps of the method according to the first aspect or the second aspect when said product is run on the computer.

According to a fourth aspect, this invention therefore relates also to a first device configured to be connected to a network on which a ledger is distributed and comprising a cryptoprocessor, a memory and an input-output interface configured to perform the steps of the method according to the first aspect.

According to a fifth aspect, this invention therefore relates also to a second device configured to be connected to a network on which a ledger is distributed and comprising a cryptoprocessor, a memory and an input-output interface configured to perform the steps of the method according to the second aspect.

According to a sixth aspect, this invention therefore relates also to a system comprising the first device according to the fourth aspect and the second device according to the fifth aspect.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 is a schematic illustration of a system according to an embodiment of the present invention;
- Figure 2 is a schematic illustration of an entity according to an embodiment of the present invention;
- Figure 3 illustrates schematically a method for securely sharing data and cryptographic keys on a ledger distributed on a network between a plurality of network connected devices according to an embodiment of the present invention.

### DETAILED DESCRIPTION OF EMBODIMENTS OF THE INVENTION

In the description detailed below, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The description detailed below is, therefore, not to be taken in a limiting sense, and the scope of the present invention is defined only by the appended claims, appropriately interpreted, along with the full range of equivalents to which the claims are entitled.

The invention relates to a method for securely sharing data and cryptographic keys between several users. In order to protect it from being accessed by unauthorized users, shared data are encrypted.

The invention aims at enabling a legitimate but not fully trusted user to access sensitive data shared by another user even when the user owning and sharing the data is unavailable and without directly sharing the decryption key of the data with any other user. Such an access shall be possible only when some pre-requisites defined by the data owner are fulfilled, but even if he is not available to check these pre-requisites and to decrypt the shared data.

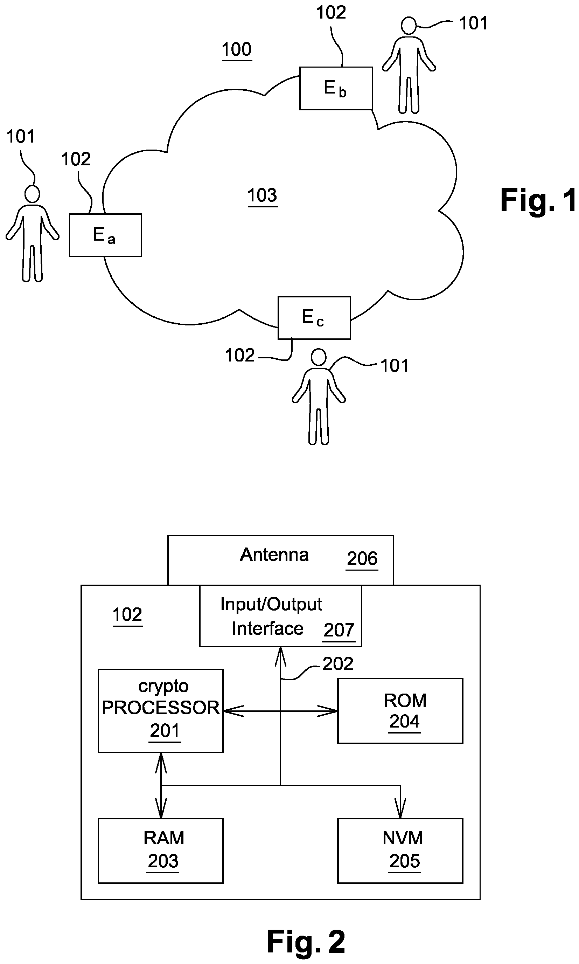

Such a sharing is performed by a system 100 on a ledger distributed on a network. As depicted on **Figure 1****,** each user 101 participating to the ledger uses a network connected device 102, called entity Ei, connected to the other network connected devices through the network 103. Such network connected devices may for example be smart cards, mobile phones, tablets, personal computers. Such a network may be a peer to peer network. In the following paragraphs the word "Entity" is used to refer to both a user himself and to its network connected device.

**Figure 2** is a schematic illustration of such an entity 102. The entity may include a cryptoprocessor 201 connected via a bus 202 to a random access memory (RAM) 203, a read-only memory (ROM) 204, and/or a non-volatile memory (NVM) 205. The entity may further include a connector connected to the bus and by which the device may be connected to an antenna 206. Such an antenna may be used to connect the entity to various forms of wireless networks, e.g., wide-area networks, WiFi networks, or mobile telephony networks. Alternatively, the entity may connect to networks via wired network connections such as Ethernet. The entity may also include an input/output interface 207 providing interfaces to the user of the device, such as one or more screens, loudspeakers, a mouse, tactile surfaces, a keyboard etc...

The main idea of the invention is that the owner of the data to be shared shares it under an encrypted form and shares among a set of trusted entities decryption elements such that no entity can decrypt the shared data on its own and such that at least a minimum number of trusted entities are required to cooperate for decrypting the encrypted data.

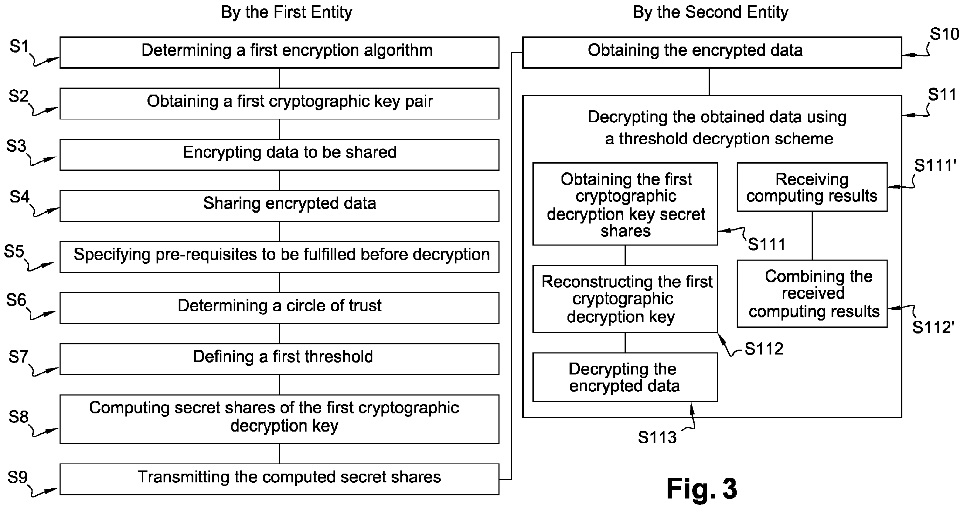

More precisely, according to a first aspect of the invention, in order to share securely data d_{Ea} between a first entity Eₐ 102 owner of data to be shared d_{Ea} and a second entity E_{b} 102 requesting access to this data d_{Ea}, the entities described above may be configured to perform the steps described below and illustrated on **Figure 3****.** These steps may be performed independently by any entity participating to the ledger according to the invention and willing to share data with the other entities.

First, the first entity Eₐ 102 defines rules and prerequisites to be fulfilled to obtain access to data, and shares securely data and cryptographic key on the distributed ledger with a plurality of entities by performing the steps described below. This first entity is any entity of the system according to the invention and doesn't know in advance which entities are going to request access to the shared data it owns and which data in case several data are shared in parallel.

In a first step S1, the first entity Eₐ 102 determines a first encryption algorithm to be used for encrypting the data to be shared. Such an algorithm may for example be a symmetric key algorithm or an asymmetric key algorithm, such as RSA, AES or EI Gamal.

In a second step S2, the first entity Eₐ 102 obtains a first cryptographic key pair comprising a first cryptographic encryption key and a first cryptographic decryption key.

In a third step S3, the first entity Eₐ 102 encrypts data to be shared d_{Ea} using said generated first cryptographic encryption key and said determined first encryption algorithm. It obtains then encrypted data c_{Ea.}

In a fourth step S4, the first entity Eₐ 102 shares the encrypted data c_{Ea} with said plurality of entities over the ledger, including with the second entity E_{b} 102. In this step, the second entity E_{b} 102 thus obtains the encrypted data c_{Ea} of which he may afterwards request a decryption; but he may not decrypt it yet by himself since he does not know the decryption key.

In a fifth step S5, the first entity Eₐ 102 specifies pre-requisites to be fulfilled before decryption of the shared encrypted data. For example, the entity requesting the decryption may be required to own an access authorization token specifying that it has access rights to the shared data. As another example, in case the shared data are identity data of an individual requested by an entity from a foreign country, it may be verified before decryption that this individual has applied for a visa to this foreign country. The first entity Eₐ 102 may create a first smart contract, running on said distributed ledger. When executed, the first smart contract may automatically verify that said specified pre-requisites are fulfilled and trigger decryption of said shared encrypted data only when said specified pre-requisites are fulfilled. Using such a smart contract, the owner of the data to be shared makes sure that the pre-requisites he defined are fulfilled before any decryption takes place, even when he is not himself available for checking that the pre-requisites are met.

In a sixth step S6, the first entity Eₐ 102 determines a first predetermined number ki of trusted entities E_{i,1}, E_{i,2} , .... E_{i,ki} among said plurality of entities. These ki trusted entities form a circle of trust for the first entity Eₐ

In a seventh step S7, the first entity Eₐ 102 defines a first threshold Ti equal to a minimum number of entities required for decryption of the shared encrypted data among said trusted entities. The first threshold Ti shall be lower or equal to the number of trusted entities belonging to the trust circle of the first entity Eₐ.

In an eighth step S8, the first entity Eₐ 102 computes as many secret shares of said first cryptographic decryption key as the first predetermined number ki of trusted entities by applying a secret sharing scheme to said first cryptographic decryption key.

In a ninth step S9, the first entity Eₐ 102 securely transmits said computed secret shares to the trusted entities. By doing so, the first entity gives the trusted entities the power to decrypt the encrypted shared data by collectively using their secret shares. At least Ti trusted entities shall work together in order to perform such a decryption.

Then, the second entity E_{b} 102 requesting access to data d_{Ea} shared by the first entity Eₐ 102 accesses securely the data d_{Ea} by performing the steps described below. The second entity may be any entity of the system according to the invention. It may be an entity that is not a trusted entity belonging to the circle of trust of the first entity.

In a tenth step S10, the second entity E_{b} 102 obtains the requested data c_{Ea}, encrypted with the first cryptographic encryption key and the determined first encryption algorithm by said first entity Eₐ. In the case of sharing such encrypted data on the ledger, such data may be obtained by reading the data from the ledger. Alternatively, such data may be obtained by reading it from any other location storing the data after it has been shared during the fourth step S4.

In an eleventh step S11, the second entity E_{b} 102 decrypts said encrypted data using a threshold decryption scheme.

This scheme is performed by a plurality of trusted decrypting entities, each trusted decrypting entity using the first cryptographic decryption key secret share it received from the first entity Eₐ in the ninth step S9 described above. The plurality of trusted decrypting entities are among said first predetermined number ki of trusted entities E_{i,1}, E_{i,2} , .... E_{i,ki} determined by the first entity Eₐ in the sixth step S6 described above.

For a correct decryption, the number of trusted decrypting entities is at least equal to said first threshold Ti defined by the first entity Eₐ in the seventh step S7.

Moreover, such a decryption is performed only if the pre-requisites specified by said first entity Eₐ in the fifth step S5 described above are fulfilled. For that, the second entity E_{b} 102 may request the execution of the smart contract created by the first entity Eₐ on the distributed ledger in the fifth step.

The threshold decryption scheme used may be among (but not limited to): threshold EIGamal decryption scheme, threshold symmetric one-time-key-use decryption scheme, threshold RSA decryption scheme, and threshold ECC-EIGamal decryption scheme, threshold Paillier decryption scheme.

Using such threshold decryption schemes, the decryption of the shared encrypted data c_{Ea} may be performed according to two embodiments.

According to a first embodiment, the trusted decrypting entities transmit their part of the decryption key to the second entity such that the second entity is able to fully retrieve the decryption key and to decrypt the shared encrypted data. In this embodiment, decrypting by the second entity E_{b} 102 of the encrypted data c_{Ea}, in the eleventh step S11, comprises:
- in a step S111, securely obtaining, from each trusted decrypting entity, the first cryptographic decryption key secret share received by said entity,
- in a step S112, combining the obtained first cryptographic decryption key secret shares to reconstruct the first cryptographic decryption key,
- in a step S113, decrypting the encrypted requested data c_{Ea} with the reconstructed first cryptographic decryption key to get the decrypted requested data d_{Ea}.

According to a second embodiment, the trusted decrypting entities transmit to the second entity elements which enable the second entity to get the decrypted requested data without reconstructing the first cryptographic decryption key.

In this embodiment, decrypting by the second entity E_{b} 102, of the encrypted data c_{Ea}, in the eleventh step S11, comprises:
- in a step S111', securely receiving, from each trusted decrypting entity, a computing result obtained from the encrypted requested data and from the first cryptographic decryption key secret share received by said entity,
- in a step S112', combining the received computing results to get the decrypted requested data.

Here below, the method according to the first aspect is described with two different threshold decryption schemes: the threshold EIGamal decryption scheme and the threshold symmetric one-time-key-use decryption scheme. The threshold symmetric one-time-key-use decryption scheme is given as an example of the first embodiment. The threshold EIGamal decryption scheme is given as an example of the second embodiment. In the following paragraphs, the steps which do not depend on the decryption scheme are not described and are supposed to be executed as described above.

According to a threshold symmetric one-time-key-use decryption scheme, the entities of the system described above perform the following steps:

In the first step S1, the first entity Eₐ 102 determines as a first encryption algorithm the threshold symmetric one-time-key-use decryption scheme.

Then, in the second step S2, the first entity Eₐ 102 obtains a first cryptographic key pair comprising: as a first cryptographic decryption key and as a first cryptographic encryption key, a symmetric key K_{long} obtained by applying a key derivation function KDF to a key usable one time k_{short.:} K_{long} = KDF(kₛₕₒᵣₜ).

In the third step S3, the first entity Eₐ 102 encrypts data to be shared m (in Zp*) with the first cryptographic encryption key k_{long} to obtain encrypted data c : c= Enc[k_{long}](m).

In the fourth step S4, the first entity Eₐ 102 shares the encrypted data c with the plurality of entities and especially with the second entity E_{b} 102.

In the seventh step S7, the first entity Eₐ 102 defines a first threshold t equal to a minimum number of entities required for decryption of the shared encrypted data among said trusted entities.

In the eighth step S8, the first entity Eₐ 102 computes secret shares of the first cryptographic decryption key for the trusted entities belonging to its circle of trust. The secret share for an entity identified by an identifier xᵢ is shareᵢ =(xᵢ, yᵢ=Poly(xᵢ)) with Poly[x]=kₛₕₒᵣₜ + a₁x + ... aₜx^{t-1}, aᵢ being a random values. The first entity Eₐ 102 then transmits them to the trusted entities in the ninth step S9.

In the eleventh step S11, after having requested access to data m and obtained said encrypted data c from the first entity Eₐ, the second entity E_{b} 102 decrypts said encrypted data c by performing the steps S111 to S113 described here above.

More precisely:
In the step S111, the second entity E_{b} 102 securely obtains, from each trusted decrypting entity, the first cryptographic decryption key secret share received by said entity : share =(xᵢ, yᵢ=Poly(xᵢ)). The number of trusted entities transmitting their secret share, called trusted decrypting entities, is at least equal to the first threshold defined by the first entity Eₐ in the seventh step S7.

In the step S112, the second entity E_{b} 102 combines the obtained first cryptographic decryption key secret shares to reconstruct the first cryptographic decryption key k_{long}.
For that, the second entity E_{b} 102 computes:
- For each trusted decrypting entity Ej, Ij= prod_{u∈list_shares,u≠j} (-xᵤ)/(xⱼ- xᵤ)
- kₛₕₒᵣₜ = prod_{j∈list_shares} partial_decⱼ^(Iⱼ))⁻¹ with partial_decⱼ = yⱼ
- k_{long} = KDF(kₛₕₒᵣₜ).
with list_shares the list of the indexes of the trusted decrypting entities.

In the step S113, the second entity E_{b} 102 decrypts the encrypted requested data c with the reconstructed first cryptographic decryption key k_{long} to get the decrypted requested data m : m = Dec[k_{long}] (c).

With this threshold symmetric one-time-key-use decryption scheme, at the end the second entity obtains the key kₛₕₒᵣₜ and the first cryptographic decryption key k_{long} and consequently these keys can be used only one time.

According to a threshold EIGamal decryption scheme, the entities of the system described above perform the following steps.

In the first step S1, the first entity Eₐ 102 determines as a first encryption algorithm the threshold EIGamal encryption scheme.

Then, in the second step S2, the first entity Eₐ 102 obtains a first cryptographic key pair comprising :
- as a first cryptographic decryption key, a secret key sₖ=S with S a random value in]0.. p-1[,
- as a first cryptographic encryption key, a public key pₖ=g^{S} mod p,
where q is a prime, p=rq+1 is a prime with r a random number and g is the generator of Fₚ of order q.

In the third step S3, the first entity Eₐ 102 encrypts data to be shared m (in Zp*) with the first cryptographic encryption key, the public key pk, to obtain encrypted data (c₁, c₂) with c₁ = g^{k} (mod p) and c₂ = m(pₖ)^{k} (mod p), k being a random value in ]0..p-1[.

In the fourth step S4, the first entity Eₐ 102 shares the encrypted data (c₁, c₂) with the plurality of entities and especially with the second entity E_{b} 102.

In the seventh step S7, the first entity Eₐ 102 defines a first threshold t equal to a minimum number of entities required for decryption of the shared encrypted data among said trusted entities.

In the eighth step S8, the first entity Eₐ 102 computes secret shares of said first cryptographic decryption key for the trusted entities belonging to its circle of trust. The secret share for an entity identified by an identifier xᵢ is share =(xᵢ, yᵢ=Poly(xᵢ)) with Poly[x]=S + a₁x + ... aₜx^{t-1}, aᵢ being random values in Zₚ*. The first entity Eₐ 102 then transmits the secret shares to the trusted entities in the ninth step S9.

In the eleventh step S11, after having requested access to data m and obtained said encrypted data (c₁, c₂) from the first entity Eₐ, the second entity E_{b} 102 decrypts said encrypted data (c₁, c₂) by performing the steps S111' and S112' described here above.

More precisely:
In the step S111', the second entity E_{b} 102 securely receives, from each trusted decrypting entity Ei, a computing result partial_deci obtained from the encrypted requested data (c₁, c₂) and from the first cryptographic decryption key secret share received by said entity share : partial_deci = c₁^{yi} mod p. The number of trusted entities transmitting their computing result partial_deci, called trusted decrypting entities, is at least equal to the first threshold defined by the first entity Eₐ in the seventh step S7.

In the step S112', the second entity E_{b} 102 combines the received computing results partial_deci to get the decrypted requested data m by computing :
- For each trusted decrypting entity Ej, Ij= prod_{u∈list_shares,u≠j} (-xᵤ)/(xⱼ- xᵤ) mod q,
- m = (prod_{j∈list_shares} partial_decⱼ^(Iⱼ))⁻¹ * c₂ mod p
with list_shares the list of the indexes of the trusted decrypting entities.

Using the threshold EIGamal decryption scheme, contrarily to the case of the threshold symmetric one-time-key-use decryption scheme, the first cryptographic decryption key S is not revealed and can be used again to encrypt many different messages.

According to a second aspect, the invention is also related to a computer program product directly loadable into the memory of at least one computer, comprising software code instructions for performing the steps of the method described here before when said product is run on the computer.

According to a third aspect, the invention is also related to a first device configured to be connected to a network on which a ledger is distributed and comprising a cryptoprocessor, a memory and an input-output interface and configured to perform the steps S1 to S9 described here before.

According to a fourth aspect, the invention is also related to a second device configured to be connected to a network on which a ledger is distributed and comprising a cryptoprocessor, a memory and an input-output interface and configured to perform the steps S10 and S11 described here before.

According to a fifth aspect, the invention is also related to a system comprising the first device according to the third aspect and the second device according to the fourth aspect and described here before.

In addition to these features, such computer program, devices and system may be configured for performing or may comprise any other features described here before.

As a result, such methods, devices and system allow any entity of the system to securely share data with the other entities and enable a legitimate but not fully trusted entity to access the shared data even when the entity owning the data is unavailable and without directly sharing the decryption key with any other entity, but only when certain pre-requisites defined by the data owner are fulfilled.

## Claims

1. A method for secure data and cryptographic key sharing on a ledger distributed on a network (103) between a plurality of network connected devices called entities (102) comprising,
performed by a first entity (Eᵢ) of said plurality of entities, owner of data to be shared :
- determining (S1) a first encryption algorithm,
- obtaining (S2) a first cryptographic key pair comprising a first cryptographic encryption key and a first cryptographic decryption key,
- encrypting (S3) data to be shared using said generated first cryptographic encryption key and said determined first encryption algorithm,
- sharing (S4) encrypted data with said plurality of entities,
- specifying (S5) pre-requisites to be fulfilled before decryption of the shared encrypted data,
- determining (S6) a first predetermined number (ki) of trusted entities (E_{i,1}, E_{i,2} , .... E_{i,ki}) among said plurality of entities,
- defining (S7) a first threshold (Ti) equal to a minimum number of entities required for decryption of the shared encrypted data among said trusted entities,
- computing (S8) as many secret shares of said first cryptographic decryption key as the first predetermined number (ki) of trusted entities by applying a secret sharing scheme to said first cryptographic decryption key,
- securely transmitting (S9) said computed secret shares to the trusted entities.

2. The method of claim 1 comprising creating (S5) a first smart contract, running on said distributed ledger, said smart contract automatically verifying that said specified pre-requisites are fulfilled and triggering decryption of said shared encrypted data when said specified pre-requisites are fulfilled.

3. A method for secure access to data shared on a ledger distributed on a network (103) between a plurality of network connected devices called entities (102) comprising,
performed by a second entity (E_{b}) of said plurality of entities requesting access to data (d_{Ea}) owned by a first entity of said plurality of entities (Eₐ), said first entity (Eₐ) having previously performed the steps of the method according to claim 1 or claim 2 to share said requested data and first cryptographic decryption key secret shares :
- obtaining (S10) said requested data encrypted (c_{Ea}) with the first cryptographic encryption key and the determined first encryption algorithm by said first entity (Eₐ),
- decrypting (S11) said obtained data using a threshold decryption scheme performed by a plurality of trusted decrypting entities, among said trusted entities, each using the first cryptographic decryption key secret share transmitted to it by the first entity (Eₐ),
the number of trusted decrypting entities being at least equal to said first threshold (Ti),
and said decryption of said obtained data being performed only if said pre-requisites specified by said first entity (Eₐ) are fulfilled.

4. The method of claim 3, wherein said used threshold decryption scheme is among: threshold EIGamal decryption scheme, threshold symmetric one-time-key-use decryption scheme, threshold RSA decryption scheme, and threshold ECC-EIGamal decryption scheme, threshold Paillier decryption scheme.

5. The method of claim 3 or claim 4, comprising:
- requesting (S11) the execution of the first smart contract created by the first entity (Eₐ) on the distributed ledger,
said decryption of said obtained data being performed only if pre-requisites verified by the first smart contract are fulfilled.

6. The method of claim 4, wherein decrypting said obtained data comprises :
- securely obtaining (S111), from each trusted decrypting entity, the first cryptographic decryption key secret share received by said entity,
- combining (S112) the obtained first cryptographic decryption key secret shares to reconstruct the first cryptographic decryption key (sk_{Ea}),
- decrypting (S113) the encrypted requested data (c_{Ea}) with the reconstructed first cryptographic decryption key to get the decrypted requested data (d_{Ea}).

7. The method of claim 4, wherein decrypting said obtained data comprises :
- securely receiving (S111'), from each trusted decrypting entity, a computing result obtained from the encrypted requested data (c_{Ea}) and from the first cryptographic decryption key secret share received by said entity,
- combining (S112') the received computing results to get the decrypted requested data (d_{Ea}).

8. A computer program product directly loadable into the memory of at least one computer, comprising software code instructions for performing the steps of claim 1 or 3 when said product is run on the computer.

9. A first device (Eₐ) (102) configured to be connected to a network (103) on which a ledger is distributed and comprising a cryptoprocessor (201), a memory (203, 204, 205) and an input-output interface (207) configured to perform the steps of claim 1 or 2.

10. A second device (E_{b}) (102) configured to be connected to a network (103) on which a ledger is distributed and comprising a cryptoprocessor (201), a memory (203, 204, 205) and an input-output interface (207) configured to perform the steps of claim 3.

11. A system (100) comprising the first device (Eₐ) according to claim 9 and the second device (E_{b}) according to claim 10.
